# EUROPÄISCHE PATENTSCHRIFT

(11) **EP 0 477 207 B1**
(45) Veröffentlichungstag und Bekanntmachung des Hinweises auf die Patenterteilung: **21.09.1994**
(21) Anmeldenummer: 90908484.0
(22) Anmeldetag: 13.06.1990
(51) Int. Cl.: A47F 7/02, A45C 11/16, A45C 13/02, B65D 81/16

(54) **PRÄSENTATIONSLADE UND VERFAHREN ZU IHRER HERSTELLUNG**
DISPLAY TRAY AND PROCESS FOR MAKING IT
PLATEAU DE PRESENTATION ET PROCEDE POUR SA FABRICATION

(30) Priorität: 15.06.1989 DE 3919517; 04.07.1989 DE 8908130 U; 22.07.1989 DE 8908935 U; 21.11.1989 DE 3938558; 05.12.1989 DE 3940151; 27.03.1990 DE 9003525 U
(43) Veröffentlichungstag der Anmeldung: 01.04.1992
(73) Patentinhaber: FRIEDRICH KLING GmbH, D-75212 Birkenfeld (DE)
(72) Erfinder: Braun, Reiner, W-7540 Neuenbürg (DE)
(74) Vertreter: Pfeifer, Hans-Peter, Dr., Dr. H.-P. Pfeifer Dr. P. Jany, Patentanwälte
(86) Internationale Anmeldenummer: DE9000453
(87) Internationale Veröffentlichungsnummer: WO9015558

(56) Entgegenhaltungen:
- EP-A- 0 032 876
- FR-A- 1 270 424
- US-A- 3 578 549
- US-A- 3 901 384
- US-A- 4 098 938
- US-A- 4 432 456
- US-A- 4 658 567

## Beschreibung

Die Erfindung betrifft eine Präsentationslade mit einem eine Tragschicht aufweisenden Präsentationsteil zur Lagerung von Präsentationsobjekten und einem gegenüber dem Präsentationsteil verstärkten Rand sowie ein Verfahren zu ihrer Herstellung.

Präsentationsladen dienen dazu, die Präsentationsobjekte in optisch ansprechender Form zu präsentieren. Die Erfindung richtet sich insbesondere auf die Präsentation von Schmuckstücken (einschließlich Uhren) und Brillen. In Juweliergeschäften werden z.B. Schmuckschränke verwendet, die eine Vielzahl von herausnehmbaren Laden enthalten. Vielfach sind Präsentationsladen spezifisch auf einen transportablen Musterbehälter für Verkaufsreisende abgestimmt. Auch ein solcher Musterkoffer enthält eine Vielzahl von Laden.

Die Erfindung bezieht sich insbesondere auf Präsentationsladen für solche Präsentationsobjekte, die ein im Verhältnis zu der Präsentationslade geringes Gewicht haben.

Insbesondere sind die erfindungsgemäßen Laden zur Benutzung in Verbindung mit den erwähnten transportablen Musterbehältern geeignet. Im folgenden wird ohne Beschränkung der Allgemeinheit beispielhaft auf Schmuckpräsentationsladen Bezug genommen, welche kurz auch als Schmuckladen bezeichnet werden.

Der Präsentationsteil ist dem jeweiligen Anwendungszweck angepaßt. Häufig besteht er einfach aus einer ebenen Fläche, die mit Stegen in mehrere Felder (z.B. für Armreife, Anhänger, Armbänder) passend eingeteilt sein kann. Solche Laden werden im folgenden als Felderladen bezeichnet. Schmuckladen für ringförmige Schmuckstücke ("Ringladen") haben auf der Präsentationsfläche von elastischem Schaumstoff umgebene Ringaufnahmen zur Halterung der Ringe in aufrechter Stellung. Für manche Anwendungszwecke werden auch speziell profilierte Präsentationsteile verwendet. So haben zum Beispiel Präsentationsteile für Colliers ein dem menschlichen Hals ähnliches Profil.

Die bekannten Schmuckladen werden weitgehend handwerklich hergestellt. Die Tragschicht des Präsentationsteils und der Rand bestehen üblicherweise aus Holz, welches mit einem dekorativen Überzug, beispielsweise aus Stoff oder Kunstleder, versehen wird. Solche Laden sind zwar optisch ansprechend und erfüllen daher gut die Präsentationsfunktion. Ihre Handhabung läßt aber zu wünschen übrig. Außerdem ist die Herstellung aufwendig und demzufolge kostspielig.

Aus der DE-U-86 13 991 ist eine Schmucklade bekannt, die eine vereinfachte Fertigung ermöglicht. Dabei besteht der Rand aus vier stabilen Kunststoff-Formteilen, von denen jeweils zwei im Spritzgußverfahren und als Strangpreß-Hohlprofil hergestellt sind. Hiermit ist ein hoher Aufwand verbunden.

Aus der US 4,432,456 ist eine Felderlade bekannt, die aus einem einzigen Kunststoff-Profilteil besteht. Dabei bilden die zwischen den Präsentationsfeldern verlaufenden Stege eine offene Gitterstruktur. In die Zwischenräume des Gitters werden Einsatzelemente eingesetzt, auf denen Schmuckstücke befestigt werden können. Die Seitenwände der Einsatzelemente und die Wände des Gitters sind derartig gegeneinander geneigt, daß die Einsatzelemente beim Einsetzen einschnappen und festgehalten werden. Die offene Gitterstruktur ermöglicht es, die aus einem festen Material bestehenden und deswegen stramm in dem Gitter sitzenden Einsatzelemente durch Drücken von unten wieder aus dem Gitter herauszunehmen. Diese Präsentationslade läßt sich verhältnismäßig einfach herstellen, erfüllt jedoch keine gehobenen Ansprüche an das ästhetische Erscheinungsbild und hat ein verhältnismäßig hohes Gewicht.

Ringladen haben üblicherweise eine mit rechteckigen Ausnehmungen versehene Abdeckplatte, wobei unter den Ausnehmungen jeweils zwei gegeneinander anstoßende Polsterkörper so angeordnet sind, daß die Trennlinie zwischen den Polsterkörpern, in die der Ring eingesteckt wird, entlang der Längsmittellinie der Ausnehmung verläuft. Die Abdeckplatte und die Polsterkörper sitzen in einem flachen Kasten und die gesamte Lade ist üblicherweise mit Leder oder einem samtähnlichen Textilmaterial verkleidet. Eine abgewandelte Ausführungsform ist in der DE-U 68 00 584 beschrieben. Dort sind die Polsterkörper als Polsterstäbe ausgebildet, die sich über die gesamte Breite der Lade erstrecken. Die Stäbe sitzen dabei in einem wie üblich aus einem Rahmen mit Boden gebildeten Kasten.

Der Erfindung liegt die Aufgabe zugrunde, eine Präsentationslade zur Verfügung zu stellen, die hohe ästhetische Anforderungen erfüllt, die notwendigen konstruktiven Eigenschaften, insbesondere hinsichtlich Stabilität und Verwindungssteifigkeit aufweist und zugleich verbesserte Handhabungseigenschaften hat.

Die Aufgabe wird bei einer Präsentationslade der eingangs bezeichneten Art dadurch gelöst, daß der Rand einen Kern aus Hartschaum und einen Überzug aus Kunststoffolie aufweist.

Das Verkleben eines Hartschaum-Formkörpers mit einem Überzug aus verschiedenen Materialien, darunter Folie, ist eine von Hartschaumverpackungen her bekannte konstruktive Maßnahme (z.B. DE-A-25 23 310 und DE-U-74 25 493).

Die Erfindung ermöglicht eine bedeutende Gewichtsersparnis. Dies ist vor allem bei Schmuckladen für Musterkoffer von großer praktischer Bedeutung.

Außerdem ist eine den jeweiligen Erfordernisse angepaßte Profilgestaltung des Randes der Lade ohne weiteres möglich. Beispielsweise kann eine Stapelnut vorgesehen sein, durch die mehrere Schmuckladen ohne zu verrutschen stapelbar sind. Die Formgestaltung kann auch problemlos auf ästhetische Erfordernisse abgestellt werden, beispielsweise durch Verwendung runder Kanten oder einer abgerundeten Seitenfläche.

Überraschenderweise lassen sich diese wesentlichen Vorteile bei gleichzeitig erheblich vermindertem Herstellungsaufwand erzielen, ohne daß die Stabilität oder die Präsentationsfunktion beeinträchtigt wird. Der Verbund von Kunststoffolie und Hartschaum verleiht dem Rand hohe Stabilität. Dies trägt wesentlich dazu bei, daß trotz des spezifisch leichten Hartschaummaterials ein die Präsentationsfunktion beeinträchtigender "billiger" Eindruck vermieden wird. Das optische Erscheinungsbild läßt sich zusätzlich durch die Gestaltung der Überzugsfolie beeinflussen. Bevorzugt weist sie eine Lederprägung oder Beflockung auf.

Als Tragschicht des Präsentationsteils kann eine Hartschaumplatte bzw. ein Formteil aus Hartschaum dienen, welcher zweckmäßigerweise einstückig in das Hartschaumprofil des Randes übergeht. Dies ist für Ringladen zweckmäßig, erfordert allerdings eine Mindeststärke des Präsentationsteils, um die erforderliche Stabilität zu gewährleisten.

Gemäß einer insbesondere für Felderladen bevorzugten Ausführungsform weist der Präsentationsteil eine gesonderte Tragschicht auf, welche aus einem Material von - im Vergleich zu Hartschaum - höherer Dichte und Festigkeit besteht. Dadurch lassen sich besonders flache, platzsparende Schmuckladen herstellen. Geeignet ist beispielsweise eine Kunststoffplatte oder ein Schichtmaterial auf Holzbasis (Sperrholz, Preßspan, Hartfaser u.dgl.). Als besonders geeignet erweist sich überraschenderweise ein fester und dünner Karton.

Die Kunststoffolie überzieht den Hartschaumkern (im Gegensatz zu der DE-A-25 23 310 und DE-U-74 25 493) auf mindestens drei Seiten, nämlich der Oberseite, der Unterseite und der von dem Präsentationsteil abgewandten Seitenfläche. Das Hartschaummaterial des Randes sollte vollständig bedeckt und somit nicht sichtbar sein.

Für Felderladen ist es vorteilhaft, wenn der zweite Kunststoffolienkörper den Präsentationsteil bedeckt und die Stege zur Abtrennung der Felder in die Kunststoffolie eingeprägt sind. Für alle Ladentypen ist es vorteilhaft, wenn der zweite Kunststoffolienkörper mit der Tragschicht direkt oder indirekt zumindest in der Nachbarschaft des Randes zu einem Schichtverbund verbunden ist. Die Verbindung erfolgt zweckmäßigerweise durch (nicht unbedingt vollflächiges) Verkleben. Bei einer solchen Lade besteht also der Rand aus einem Schichtverbund von Hartschaumstoff und Kunststoffolie und der Präsentationsteil zumindest am Rand aus einem Verbund der Kunststoffolie mit der Tragschicht. Eine solche Lade zeichnet sich durch eine ideale Kombination von hoher Festigkeit, geringer Bauhöhe, geringem Gewicht und ansprechendem Aussehen aus.

Der Hartschaum, aus dem der Hartschaumkern hergestellt ist, sollte relativ fest sein. Bevorzugt erfüllt er die deutsche Industrienorm (DIN) 7726 in der Fassung vom Mai 1982. Die Dichte sollte mehr als 65 kg/m³ betragen. Als Material läßt sich insbesondere Polystyrol oder Polypropylen verwenden.

Das Material der Überzugsfolie ist vorzugsweise so hart und fest, daß ein aus ihm geformter Folienkörper auch ohne Kern formstabil ist. Besonders geeignet ist ein druck-, zug- und schlagfestes Kunststoffmaterial, insbesondere ABS (Acrylnitrilbutadien) oder Polystyrol. Die Materialstärke der Überzugsfolie liegt vorzugsweise zwischen 0,2 und 0,8 mm, besonders bevorzugt zwischen 0,3 und 0,6 mm.

Die Erfindung richtet sich auch auf ein Verfahren zum Herstellen einer Präsentationslade gemäß Anspruch 12. Die Formgebung der Kunststoffolienkörper erfolgt dabei vorzugsweise durch Tiefziehen. Der Hartschaum-Formkörper und die Folienkörper werden vorzugsweise durch Kleben verbunden. Dabei sollte die Verklebung weitgehend vollflächig sein. Der Hartschaumkern kann mit einem Material höherer Festigkeit verstärkt sein, jedoch ist dies nicht notwendig und weniger bevorzugt.

Eine bevorzugte Ringlade weist eine Ringhalteplatte aus Schaumstoff auf, in die als Ringaufnahmen Schlitze eingeschnitten sind. Der Rand ist Teil eines volumenmäßig zu mindestens 50% aus Hartschaum bestehenden flachen Verbundformkörpers, auf dessen Oberseite in dem von dem Rand umgebenen Präsentationsteil die Ringhalteplatte befestigt ist. Der Verbundformkörper hat unter den Schlitzen der Ringhalteplatte von seiner Oberseite her zugängige Ausnehmungen zur Aufnahme von in die Schlitze eingeführten ringförmigen Schmuckstücken.

Der Schaumstoff der Ringhalteplatte sollte verhältnismäßig feinporig und dicht sein. Besonders bevorzugt ist eine Dichte zwischen 20 und 80 kg/m³. Als besonders geeignet hat sich ein hochgradig aufgeschäumtes, vernetztes Schaumstoffmaterial, insbesondere auf Basis von Polyethylen oder einem Polyethylen-Copolymer erwiesen, jedoch kann auch ein anderes Schaumstoffmaterial, insbesondere auf Basis von Polyurethan, vorteilhaft verwendet werden.

Gemäß einer bevorzugten Ausführungsform besteht die Ringhalteplatte aus einem Schichtverbund aus dem Schaumstoff und einer Deckschicht aus textilem Material, wobei das textile Material vorzugsweise in beide Flächenrichtungen elastisch sein sollte. Die Erfindung umfaßt jedoch auch Ausführungsformen, bei denen das Schaumstoffmaterial ohne zusätzliche Deckschicht eingesetzt wird, wobei seine Oberfläche sichtbar ist. Dies führt zu einer Ersparnis an Kosten und Gewicht. Überraschenderweise hat sich gezeigt, daß ein ansprechendes Äußeres auch ohne Deckschicht erzielbar ist, insbesondere wenn ein wärmeverformbares, unter Anwendung von Druck und Temperatur verformtes ("geprägtes") Material verwendet. In diesem Fall ist es vorteilhaft, die Oberfläche mit einer Feinstrukturprägung zu versehen. Dies geschieht vorzugsweise mit Hilfe eines "Nylon-Print-Verfahrens". Dabei wird die gewünschte Feinstruktur, die vorteilhafterweise eine textile, samtartige Struktur oder eine Lederprägung nachbildet, auf photographischem Wege auf eine Nylonfolie übertragen, die in die Prägeform bei der Wärmeverformung der Schmuckpolster eingelegt wird. Es ist auch möglich, das Schaumstoffmaterial der Ringhalteplatte unmittelbar zu beflocken.

Für den Fall, daß die Ringhalteplatte als Schichtverbund aus einer Schaumstoff-Basisschicht und einer textilen Deckschicht ausgebildet ist, werden diese Schichten vorzugsweise durch vollflächiges Verkleben miteinander verbunden.

Die Ringhalteplatte ist vorzugsweise weniger als 6 mm, besonders bevorzugt zwischen 2 und 4 mm stark. Die geringe Dicke führt zu einem geringen Gewicht. Dennoch werden die Ringe zuverlässig festgehalten.

Vorzugsweise besteht die Ringhalteplatte nur aus der Schaumstoffschicht oder aus dem zweischichtigen Schichtverbund. Es kann unter Umständen jedoch auch zweckmäßig sein, ergänzend weitere Schichten, beispielweise eine zusätzliche Auflage oder Unterlage, vorzusehen.

Die Erfindung wird im folgenden anhand eines in den Figuren schematisch dargestellten Ausführungsbeispiels näher erläutert; es zeigen:
- Fig. 1: eine Schmucklade gemäß der Erfindung in perspektivischer Ansicht;
- Fig. 2: eine Detaildarstellung einer bevorzugten Querschnittsform von Stegen und Rand einer Schmucklade;
- Fig. 3: einen Schnitt entlang der Linie III-III in Fig. 1.
- Fig. 4: eine perspektivische Ansicht einer Ringpräsentationslade,
- Fig. 5: eine Ringhalteplatte im Schnitt,
- Fig. 6: eine Aufsicht auf eine Ringlade nach Fig. 4,
- Fig. 7: einen Schnitt entlang der Linie VII-VII in Fig. 6,
- Fig. 8: einen Schnitt entlang der Linie VIII-VIII in Fig. 6.

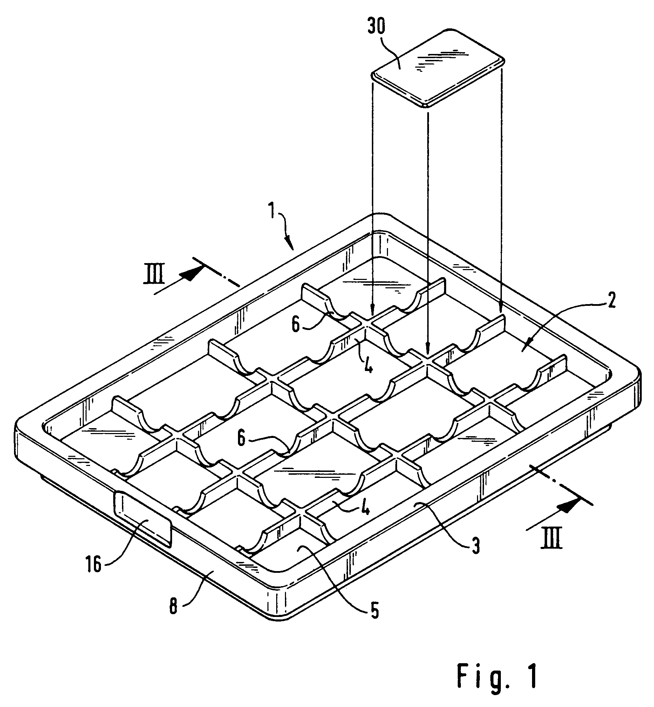

Die in Figur 1 dargestellte insgesamt mit 1 bezeichnete Schmucklade hat einen Präsentationsteil 2 und einen gegenüber dem Präsentationsteil verstärkten Rand 3. Die Oberseite des Präsentationsteils 2 ist mit Hilfe von Stegen 4 in eine Mehrzahl von Feldern 5 eingeteilt, welche zur Aufnahme von Schmuckstücken dienen. Die Stege 4 sind durch Griffausnehmungen 6 unterbrochen.

Vielfach werden die Schmuckstücke auf Schmuckpolstern 30 gelagert, die in die Felder 5 passen. Schmuckpolster und Schmuckladen, die aufeinander abgestimmt sind, werden auch als Schmuckpräsentationsset bezeichnet.

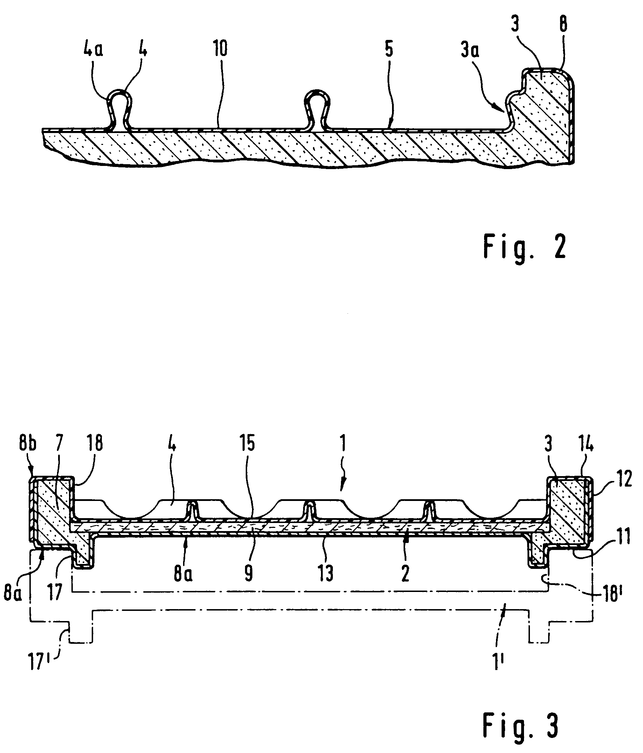

Gemäß einer bevorzugten Ausführungsform der Erfindung sind, wie in Fig. 2 übertrieben dargestellt, die Stege 4 so ausgebildet, daß ihr Querschnitt von der Bodenfläche 10 der Felder 5 nach oben hin zunimmt. Die Innenseiten 3a des Randes 3 der Lade 1 sind entsprechend nach innen (zu dem Präsentationsteil 2 hin) geneigt. Die Stege 4 und der Rand 3 sind also so ausgebildet, daß die Feldbreite und -länge auf der Höhe der Verdickung 4a der Stege 4 geringfügig (vorzugsweise ca 0,5 - 1,5 mm) geringer ist, als in der Nähe der Bodenfläche 10 der Felder 5. Die Abmessungen der auf solche Laden 1 abgestimmten Schmuckpolster 30 sind in Flächenrichtung geringfügig (vorzugsweise 0,2 - 0,5 mm) größer als die Länge und Breite der Felder 5 auf der Höhe der Verdickung 4a der Stege 4. Dadurch sitzen in die Felder 5 eingesetzte Schmuckpolster 30 in einem elastischen Paßsitz fest, so daß sie beim Transport des Präsentationsset 1, 30 nicht herausfallen können. Dies gilt selbst dann, wenn auf ihrer Oberfläche Schmuckstücke, beispielsweise durch Einstechen in das Polster, befestigt sind und die Schmucklade mit den Schmuckpolstern und den Schmuckstücken senkrechtgestellt oder sogar herumgedreht wird. Dies bedeutet einen außerordentlich wertvollen Handhabungsvorteil, insbesondere für reisende Vertreter der Schmuckbranche.

Der konstruktive Aufbau ist aus Fig. 3 besser zu erkennen. Der Rand 3 besteht aus einem Kern 7 aus Hartschaum und einem Überzug 8 aus Kunststoffolie. Der Präsentationsteil 2 weist eine Tragschicht 9 aus einem dünnen, aber festen Karton auf. Auch die Tragschicht 9 ist in der dargestellten bevorzugten Ausführungsform mit der Folie 8 überzogen. Die Folie ist mit der Tragschicht 9 und mit dem Hartschaumkern 7 zumindest auf dem überwiegenden Teil der Berührungsflächen verklebt.

Für die Stabilität sämtlicher Ausführungsformen erfindungsgemäßer Präsentationsladen ist es vorteilhaft, wenn die Tragschicht 9 des Präsentationsteils 2 zumindest in ihrem Randbereich (auf mindestens etwa 5 mm Breite) von der Folie 8 bedeckt und mit dieser verklebt ist.

Der Kunststoffolien-Überzug 8 besteht aus zwei Kunststoffolienkörpern 8a und 8b, die bevorzugt im Tiefziehverfahren hergestellt sind. Der erste Teil (Kunststofffolienkörper 8a) bedeckt zumindest die Unterseite 11 und die Seitenfläche 12 des Randes 3. In der dargestellten Ausführungsform bedeckt er darüber hinaus vollständig die Unterseite 13 des Präsentationsteils 2. Der zweite Teil des Kunststoffolienüberzuges 8 (Kunststoffolienkörper 8b) bedeckt die Oberseite 14 und die Seitenfläche 12 des Randes 3 sowie in der dargestellten bevorzugten Ausführungsform die gesamte Oberseite 15 des Präsentationsteils 2. Dabei sind im Bereich des Präsentationsteils 2 die Stege 4 zur Abtrennung der Felder 5 eingeprägt. Aus Gründen der Gewichtsersparnis kann es zweckmäßig sein, in die Kunststoffolie 8 Ausnehmungen, insbesondere im Bereich der Felder 5 zwischen den Stegen 4 und auf der Unterseite 13 des Präsentationsteils 2 vorzusehen.

Am Rand 3 sollte zumindest im Bereich der Seitenfläche 12 eine feste Verbindung (z.B. Verklebung) der Kunststofffolienkörper 8a und 8b miteinander und mit dem Hartschaumkern 7 vorgesehen sein. Eine besonders gute Stabilität läßt sich erreichen, wenn, wie dargestellt, die beiden Folienkörper 8a und 8b einander im Bereich der Seitenfläche 12 des Randes 3 überlappen, wobei sich eine Überlappung von wenigen Millimetern als ausreichend erwiesen hat. Zweckmäßigerweise weist die Seitenfläche 12, wie in Fig. 1 dargestellt, ein in den Kunststoffolien-Überzug 8 eingeprägtes Etikettenfeld 16 auf.

Im dargestellten Ausführungsbeispiel verläuft die Seitenfläche 12 des Randes 3 weitgehend gerade. Sie kann jedoch je nach den gestalterischen Erfordernissen auch durchgehend gekrümmt sein, so daß der Rand 3 die Form eines runden Wulstes hat. Als Seitenfläche im Sinne der vorausgehenden Beschreibung ist die von dem Präsentationsteil 2 abgewandte Seite des Randes 3 zu verstehen.

Wie erwähnt, sind die erfindungsgemäßen Schmuckladen 1 vorzugsweise stapelbar. Zu diesem Zweck weist der den Rand bildende Verbund-Formkörper eine Stapelnut 17 auf, die in der Projektion auf die Ebene des Präsentationsteils 2 etwa auf der gleichen Linie wie die Innenkante 18 des Randes 3 verläuft. In Figur 3 ist strichpunktiert eine weitere Schmucklade 1' dargestellt, um das Zusammenwirken der Stapelnut 17 und der Innenkante 18' zu verdeutlichen.

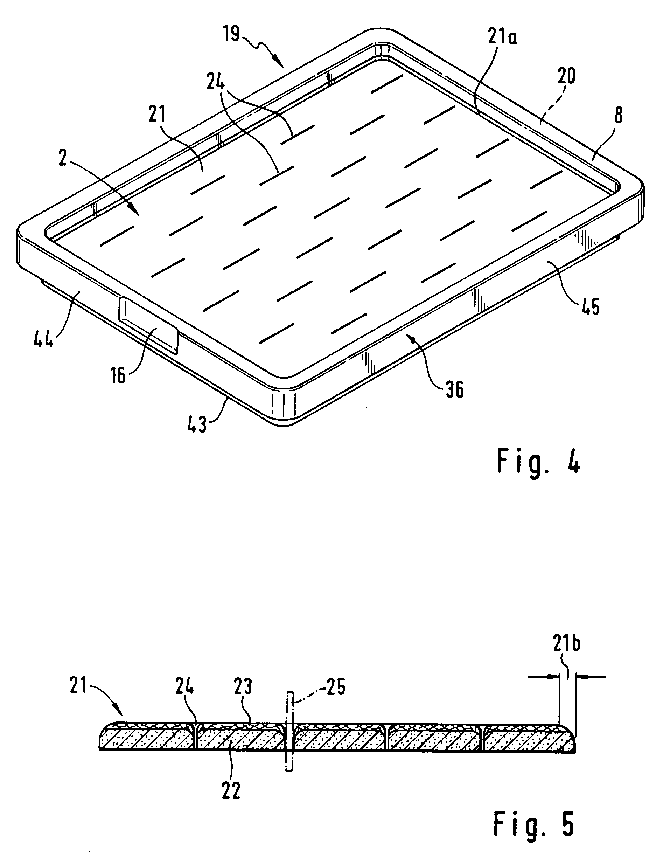

Figur 4 zeigt eine Ringlade 19, bestehend aus einem flachen Verbundformkörper 20 und einer in ihrem Präsentationsteil 2 angeordneten Ringhalteplatte 21.

Die in Figur 5 dargestellte bevorzugte Ringhalteplatte 21 besteht aus einer Schaumstoff-Basisschicht 22 und einer darauf vollflächig aufgeklebten Deckschicht 23 aus textilem Material. Zur Aufnahme der Ringe dienen Schlitze 24, welche senkrecht in den Schichtverbund 22,23 eingeschnitten sind. Die Ringe (der Übersichtlichkeit halber ist nur ein Ring 25 gestrichelt dargestellt) werden in den Schlitzen durch die Elastizität der Ringhalteplatte 1 festgehalten. Dabei ist es vorteilhaft, wenn die Schlitze 24 im entspannten Zustand sehr schmal sind. Bevorzugt sind sie einfache Einschnitte, welche ohne Materialentnahme in den Schichtverbund 22,23 eingeschnitten werden.

Die Ringhalteplatte 21 ist im Bereich 21b ihres Randes derartig verformt, daß ihre Schichtstärke zum Rand hin kontinuierlich abnimmt, wobei ihre Oberfläche nach oben hin konvex gewölbt ist, wie dies in Fig. 5 dargestellt ist. Hierdurch wird eine ästhetisch ansprechende Schattenfuge (21a in Fig. 4) erreicht.

Der in den Figuren 5 bis 8 detaillierter dargestellte Verbundformkörper 20 besteht aus einem Hartschaumformteil 42 und einem Überzug 8 aus Kunststoffolie. Der Rand 42a des Hartschaumformteils 42 bildet dabei den Kern 7 des Randes 36 der Ringlade 19. Im Bereich des Präsentationsteils 2 bildet das Hartschaumformteil 42 die Tragschicht 35. Der Rand 36 ist gegenüber dem Präsentationsteil 2 erhöht. Auch hier ist an der Unterseite 37 des Randes 36 eine umlaufende Stapelnut 38 vorgesehen, deren Dimension und Anordnung mit der Formgestaltung der Oberseite 36a des Randes 36 so abgestimmt ist, daß die Ringladen stapelbar sind.

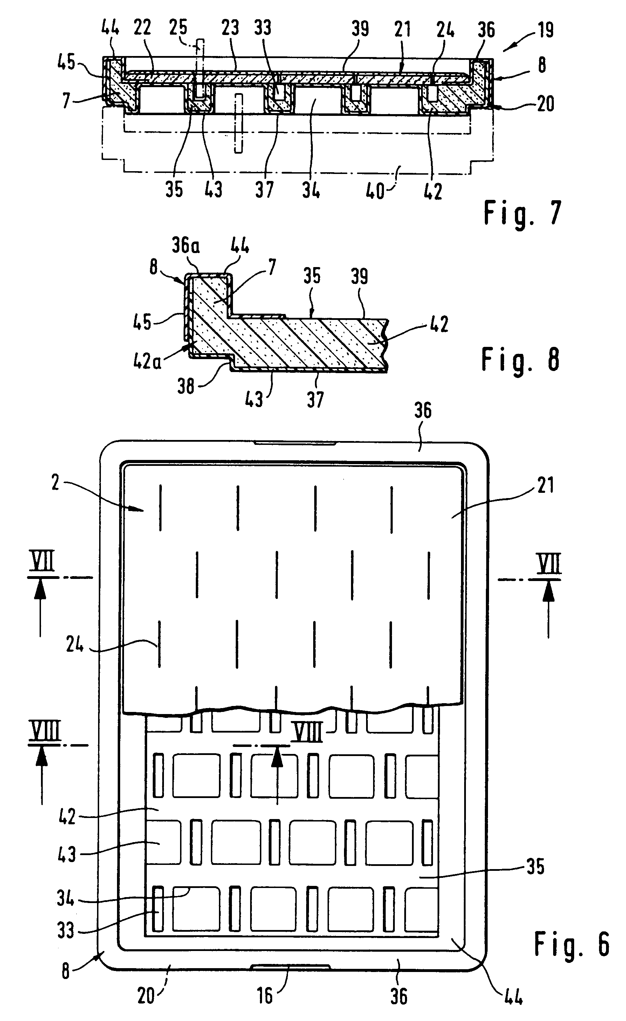

Wie aus den Figuren 6 und 7 zu ersehen ist, sind in der Tragschicht 35 Ausnehmungen 33,34 reihenweise angeordnet, wobei in jeder Reihe schmale von oben zugängliche Ausnehmungen 33 und breitere von unten zugängliche Ausnehmungen 34 alternieren. In den aufeinanderfolgenden Reihen sind die Ausnehmungen so gegeneinander versetzt, daß jeweils eine schmale Ausnehmung 33 benachbart zu einer breiten Ausnehmung 34 der nächstbenachbarten Reihe angeordnet ist.

Die Schlitze 24 sind jeweils über den schmalen Ausnehmungen 33 angeordnet, so daß ein in Fig. 7 wiederum gestrichelt dargestellter in einen Schlitz 24 eingeführter Ring in die Ausnehmung 33 eindringt.

Die von unten zugänglichen breiten Ausnehmungen 34 bieten Platz für Ringe, die sich auf einer unter der Ringlade 19 im Stapel befindlichen weiteren Ringlade 40 befinden, welche in Figur 7 lediglich strichpunktiert angedeutet ist. Dies ist möglich, weil die Ausnehmungen 13,14 in der in Fig. 6 ersichtlichen Art und Weise so angeordnet sind, daß jeweils eine schmale Ausnehmung über einer breiten Ausnehmung angeordnet ist, wenn man die in einem Stapel alternierenden Präsentationsladen jeweils um 180° gegeneinander dreht.

Wie in den Figuren 7 und 8 besonders deutlich zu erkennen ist, besteht auch bei dieser Ausführungsform der Überzug 8 aus zwei Teilen, nämlich Kunststoffolienkörpern 43 und 44. Der untere Kunststoffolienkörper 43 umgibt die Unterseite 37 des Hartschaumformteils 42 einschließlich eines Teils der Seitenfläche 45 des Randes 36. Der obere Kunststoffolienkörper 44 bedeckt die Oberseite 36a des Randes 36 und ist im Randbereich der Tragschicht 35 mit dieser verbunden. An der Seitenfläche 25 überlappt er den unteren Kunststoffolienkörper 43 und ist mit diesem verklebt.

## Patentansprüche

1. Präsentationslade mit einem eine Tragschicht (9, 35) aufweisenden Präsentationsteil (2) zur Lagerung von Präsentationsobjekten und einem gegenüber dem Präsentationsteil verstärkten Rand (3,36), **dadurch gekennzeichnet**, daß der Rand (3,36) einen Kern (7) aus Hartschaum aufweist, der von mindestens Zwei Kunststoffolienkörpern (8a,8b;43,44) umgeben ist, wobei ein erster Kunststoffolienkörper (8a,43) mindestens einen Teil der Unterseite (11) und mindestens einen Teil der Seitenfläche (12,45) des Randes (3,36) bedeckt und ein zweiter Kunststoffolienkörper (8b,44) mindestens einen Teil der Oberseite (14) und mindestens einen Teil der Seitenfläche (12,45) des Randes (2) bedeckt und wobei im Bereich der Seitenfläche eine feste Verbindung der Kunststoffolienkörper (8a,8b;43,44) vorgesehen ist.

2. Präsentationslade nach einem der vorhergehenden Ansprüche, **dadurch gekennzeichnet**, daß der zweite Kunststoffolienkörper (8b;43) mindestens in der Nachbarschaft des Randes (3,36) die Tragschicht (9, 35) des Präsentationsteils (2) bedeckt und mit dieser verbunden ist.

3. Präsentationslade nach einem der vorhergehenden Ansprüche, **dadurch gekennzeichnet**, daß die Tragschicht (9) aus einem Material besteht, welches eine höhere Dichte als der Hartschaum hat.

4. Präsentationslade nach Anspruch 3, **dadurch gekennzeichnet**, daß die Tragschicht (9) aus Karton, einem Material auf Holzbasis oder aus nicht geschäumtem Kunststoff besteht.

5. Präsentationslade nach einem der vorhergehenden Ansprüche, **dadurch gekennzeichnet**, daß der aus den Kunststoffolienkörpern (8a,8b;43,44) gebildete Überzug (8) aus Kunststoffolie eine Strukturprägung aufweist oder beflockt ist.

6. Präsentationslade nach einem der Ansprüche 2 bis 5, **dadurch gekennzeichnet**, daß der zweite Kunststoffolienkörper (8b) den Präsentationsteil (2) bedeckt und im Bereich des Präsentationsteils Stege (4) zur Abtrennung mehrerer Felder (5) in den zweiten Kunststoffolienkörper (8b) eingeprägt sind.

7. Präsentationslade nach Anspruch 6, **dadurch gekennzeichnet**, daß die die Felder (5) trennenden Stege (4) und die Innenseiten (3a) des Randes (3) so ausgebildet sind, daß die Breite und Länge der Felder (5) in der Nachbarschaft von deren Bodenfläche (10) größer ist als darüber.

8. Präsentationslade nach Anspruch 1, **dadurch gekennzeichnet**, daß der zweite Kunststoffolienkörper (8b,44) den ersten Kunststoffolienkörper (8a,43) an der Seitenfläche (12,45) des Randes (3,36) überlappt und die Kunststoffolienkörper (8a,8b; 43,44) im Überlappungsbereich miteinander verbunden sind.

9. Präsentationslade nach Anspruch 1, **dadurch gekennzeichnet**, daß in dem Präsentationsteil (2) eine Ringhalteplatte (21) aus Schaumstoff vorgesehen ist, in welcher als Ringaufnahmen Schlitze (24) ausgebildet sind,
der Rand (36) an einem volumenmäßig zu mindestens 50% aus Hartschaum bestehenden flachen Verbundformkörper (20) ausgebildet ist, auf dessen Oberseite (39) die Ringhalteplatte (21) angeordnet ist, und
der flache Verbundformkörper (20) unter den Schlitzen (24) der Ringhalteplatte (21) von seiner Oberseite (39) her zugängliche Ausnehmungen (33) zur Aufnahme von in die Schlitze (24) eingeführten ringförmigen Schmuckstücken aufweist.

10. Präsentationslade nach Anspruch 9, **dadurch gekennzeichnet**, daß die Ringhalteplatte (21) einen Schichtverbund einschließt, der eine Basisschicht (22) aus dem Schaumstoff und eine Deckschicht (23) aus textilem Stoff umfaßt.

11. Präsentationslade nach Anspruch 9 oder 10, **dadurch gekennzeichnet**, daß die Ringhalteplatte (21) im Bereich (21b) ihres Randes derartig verformt ist, daß ihre Schichtstärke zum Rand hin kontinuierlich abnimmt.

12. Verfahren zum Herstellen einer Präsentationslade mit einem Präsentationsteil zur Lagerung von Schmuckstücken und einem gegenüber dem Präsentationsteil verstärkten Rand,
**dadurch gekennzeichnet**, daß
durch Formschäumen ein Formkörper aus Hartschaum mit dem gewünschten Profil des Randes hergestellt wird,
zwei dem Profil des Formkörpers aus Hartschaum zumindest im Bereich des Randes angepaßte Folienkörper aus einer thermoplastischen Kunststoffolie geformt werden, wobei ein erster Kunststoffolienkörper mindestens einen Teil der Unterseite und mindestens einen Teil der Seitenfläche des Randes bedeckt und ein zweiter Kunststoffolienkörper mindestens einen Teil der Oberseite und mindestens einen Teil der Seitenfläche des Randes bedeckt und
die Folienkörper mit dem Formkörper aus Hartschaum zusammengefügt werden, wobei im Bereich der Seitenfläche eine feste Verbindung der Kunststoffolienkörper miteinander hergestellt wird.

13. Verfahren nach Anspruch 18, **dadurch gekennzeichnet**, daß die Kunststoffolienkörper durch Tiefziehen hergestellt werden.

## Claims

1. Display tray with a display section (2), having a supporting sheet (9,35), for mounting objects for display and an edging (3, 36), which is thickened in relation to the display section, **characterized in that** the edging (3, 36) has a core (7) of rigid foam which is surrounded by at least two plastic sheeting bodies (8a, 8b; 43, 44), of which a first plastic sheeting body (8a, 43) covers at least a part of the bottom surface (11) and at least a part of the side face (12, 45) of the edging (3, 36) and a second plastic sheeting body (8b, 44) covers at least a part of the top surface (14) and at least a part of the side face (12, 45) of the edging (2), and where the plastic sheeting bodies (8a, 8b; 43, 44) are permanently bonded together in the region of the side face.

2. Display tray according to one of the preceding claims, **characterized in that** the second plastic sheeting body (8b; 43) covers and is bonded to the supporting sheet (9, 35) of the display section (2) at least in the neighbourhood of the edging (3, 36).

3. Display tray according to one of the preceding claims, **characterized in that** the supporting sheet (9) consists of a material which has a higher density than the rigid foam.

4. Display tray according to Claim 3, **characterized in that** the supporting sheet (9) consists of cardboard, a wood-based material or a non-foamed plastic material.

5. Display tray according to one of the preceding claims, **characterized in that** the plastic sheeting covering (8) formed from the plastic sheeting bodies (8a, 8b; 43, 44) has a textural embossed pattern or is flocked.

6. Display tray according to one of claims 2 to 5, **characterized in that** the second plastic sheeting body (8b) covers the display section (2), and in the region of the display section crosspieces (4) for separating several compartments (5) are impressed into the second plastic sheeting body (8b).

7. Display tray according to Claim 6, **characterized in that** the crosspieces (4) which separate the compartments (5) and the inner sides (3a) of the edging (3) are so formed that the width and length of the compartments (5) are greater in the neighbourhood of their bottom surface (10) than above it.

8. Display tray according to Claim 1, **characterized in that** the second plastic sheeting body (8b, 44) overlaps the first plastic sheeting body (8a, 43) on the side face (12, 45) of the edging (3, 36) and the plastic sheeting bodies (8a, 8b; 43, 44) are bonded together in the region of overlap.

9. Display tray according to Claim 1 **characterized in that** in the display section (2) a ring-holding panel (21) of foamed material is provided, in which slits (24) are formed as ring sockets,
the edging (36) is formed from a flat composite moulding (20), of which at least 50% by volume consists of rigid foam and on whose top surface (39) the ring-holding panel (21) is disposed, and
the flat composite moulding (20) has, under the slits (24) of the ring-holding panel (21) and accessible from its top surface (39), recesses (33) for accommodating ring-shaped pieces of jewellery inserted into the slits (24).

10. Display train according to Claim 9, **characterized in that** the ring-holding panel (21) includes a layered composite structure which comprises a base layer (22) of the foamed material and a skin (23) of textile material.

11. Display tray according to Claim 9 or 10, **characterized in that** the ring-holding panel (21) is formed in the region (21b) of its edge in such a way that its thickness reduces continuously towards the edge.

12. Process for manufacturing a display tray with a display section for mounting pieces of jewellery and an edging thickened in relation to the display section,
**characterized in that**
a moulding with the desired profile for the edging is manufactured by foam moulding from rigid foam,
two sheeting bodies adapted to the profile of the moulding of rigid foam, at least in the region of the edging, are moulded from a thermoplastic plastic sheet, a first plastic sheeting body covering at least a part of the bottom surface and at least a part of the side face of the edging and a second plastic sheeting body covering at least a part of the top surface and at least a part of the side face of the edging, and the sheeting bodies are fitted together with the moulding of rigid foam, a permanent bond between the plastic sheeting bodies being created in the area of the side face.

13. Process according to Claim 18, **characterized in that** the plastic sheeting bodies are manufactured by drawing.

## Revendications

1. Plateau de présentation, comprenant un élément de présentation (2) muni d'une couche de support (9, 35) pour la mise en place d'objets à présenter, et un bord (3, 36) renforcé par rapport à l'élément de présentation, **caractérisé en ce** que le bord (3, 36) comprend un noyau (7) en mousse rigide qui est enveloppé par au moins deux corps de feuille de matière plastique (8a, 8b; 43, 44), un premier corps de feuille de matière plastique (8a, 43) recouvrant au moins une partie de la surface inférieure (11) et au moins une partie de la surface latérale (12, 45) du bord (3, 36), un second corps de feuille de matière plastique (8b, 44) recouvrant au moins une partie de la surface supérieure (14) et au moins une partie de la surface latérale (12, 45) du bord (2) et une liaison solide des corps de feuille de matière plastique (8a, 8b; 43, 44) étant prévue dans la région de la surface latérale.

2. Plateau de présentation selon l'une des revendications précédentes, caractérisé en ce que le second corps de feuille de matière plastique (8b; 43) recouvre la couche de support (9, 35) de l'élément de présentation (2) au moins au voisinage du bord (3, 36) et qu'il est relié à celle-ci.

3. Plateau de présentation selon l'une des revendications précédentes, caractérisé en ce que la couche de support (9) est constituée d'un matériau dont la densité est supérieure à celle de la mousse rigide.

4. Plateau de présentation selon la revendication 3, caractérisé en ce que la couche de support (9) est constituée de carton, d'un matériau à base de bois ou d'une matière plastique non cellulaire.

5. Plateau de présentation selon l'une des revendications précédentes, caractérisé en ce que le revêtement (8) en feuille de matière plastique constitué par les corps de feuille de matière plastique (8a, 8b; 43, 44) présente une impression structurée ou un flocage.

6. Plateau de présentation selon l'une des revendications 2 à 5, caractérisé en ce que le second corps de feuille de matière plastique (8b) recouvre l'élément de présentation (2) et que dans la région de l'élément de présentation, des barrettes (4) pour la séparation de plusieurs casiers (5) sont conformées dans le second corps de feuille de matière plastique (8b).

7. Plateau de présentation selon la revendication 6, caractérisé en ce que les barrettes (4) séparant les casiers (5) et les surfaces intérieures (3a) du bord (3) sont conformées de telle façon que la largeur et la longueur des casiers (5) sont plus grandes au voisinage du fond (10) qu'au-dessus de celui-ci.

8. Plateau de présentation selon la revendication 1, caractérisé en ce que le second corps de feuille de matière plastique (8b, 44) recouvre le premier corps de feuille de matière plastique (8a, 43) sur les surfaces latérales (12, 45) du bord (3, 36), et que les corps de feuille de matière plastique (8a, 8b; 43, 44) sont reliés entre eux dans la zone de recouvrement.

9. Plateau de présentation selon la revendication 1, caractérisé en ce que dans l'élément de présentation (2) est prévue une plaque porte-bagues (21) en mousse dans laquelle des logements pour bagues sont conformés sous forme de fentes (24), que le bord (36) est réalisé sur un corps moulé composite (20) plat constitué pour au moins 50 % du volume de mousse rigide et sur la surface supérieure (39) duquel est disposée la plaque porte-bagues (21), et que le corps moulé composite (20) plat présente sous les fentes (24) de la plaque porte-bagues (21), des évidements (33) accessibles à partir de sa surface supérieure (39) et destinés à recevoir des bijoux de forme annulaire introduits dans lesdites fentes (24).

10. Plateau de présentation selon la revendication 9, caractérisé en ce que la plaque porte-bagues (21) comprend une structure stratifiée qui comporte une couche de base (22) en mousse et une couche de recouvrement (23) en matière textile.

11. Plateau de présentation selon l'une des revendications 9 ou 10, caractérisé en ce que dans la région (21b) de son bord, la plaque porte-bagues (21) est déformée de telle façon que son épaisseur de couche diminue en continu en direction du bord.

12. Procédé de fabrication d'un plateau de présentation comprenant un élément de présentation pour la mise en place de bijoux et un bord renforcé par rapport audit élément de présentation, **caractérisé en ce** qu'un corps moulé en mousse rigide dont le bord présente le profil désiré, est fabriqué par moussage "in situ", que deux corps de feuille adaptés au moins dans la région du bord au profil du corps moulé en mousse rigide, sont moulés à partir d'une feuille de matière thermoplastique, un premier corps de feuille de matière plastique recouvrant au moins une partie de la surface inférieure et au moins une partie de la surface latérale du bord, et un second corps de feuille de matière plastique recouvrant au moins une partie de la surface supérieure et au moins une partie de la surface latérale du bord, que les corps de feuille sont assemblés avec le corps moulé en mousse rigide, une liaison solide entre les corps de feuille de matière plastique étant réalisée dans la région de la surface latérale.

13. Procédé selon la revendication 18, caractérisé en ce que les corps de feuille de matière plastique sont réalisés par emboutissage profond.
